# FASCICULE DE BREVET EUROPEEN

(11) **EP 4 507 963 B1**
(45) Date de publication et mention de la délivrance du brevet: **28.01.2026**
(21) Numéro de dépôt: 23717126.9
(22) Date de dépôt: 04.04.2023
(51) Int. Cl.: B64C 13/50

(54) **SYSTÈME ET PROCÉDÉ DE PILOTAGE D'ACTIONNEURS DANS UN AÉRONEF**
SYSTEM UND VERFAHREN ZUR STEUERUNG VON AKTUATOREN IN EINEM FLUGZEUG
SYSTEM AND METHOD FOR DRIVING ACTUATORS IN AN AIRCRAFT

(30) Priorité: 15.04.2022 FR 2203500
(43) Date de publication de la demande: 19.02.2025
(73) Titulaire: Safran Electronics & Defense, 75015 Paris (FR)
(72) Inventeur: LAWNICZAK, Remi-Louis, 77550 MOISSY-CRAMAYEL (FR); BONNET, Julien, 77550 MOISSY-CRAMAYEL (FR); MONTOYA, Michael, 77550 MOISSY-CRAMAYEL (FR); CHARRIER, Nicolas, 77550 MOISSY-CRAMAYEL (FR)
(74) Mandataire: Argyma
(86) Numéro de dépôt international: PCT/EP2023/058754
(87) Numéro de publication internationale: WO 2023/198507

(56) Documents cités:
- WO-A1-2007/018652
- WO-A2-2014/199070
- FR-A1- 2 927 308
- FR-A1- 2 981 044

## Description

### Domaine technique

La présente invention concerne le domaine du pilotage des actionneurs dans un aéronef.

De manière connue, un aéronef comporte un ensemble d'actionneurs, notamment dédiés à la commande de vol et au déplacement des surfaces mobiles de l'aéronef telles que la gouverne ou l'orientation des pales d'un hélicoptère. L'aéronef comprend également des calculateurs électroniques permettant de piloter les actionneurs.

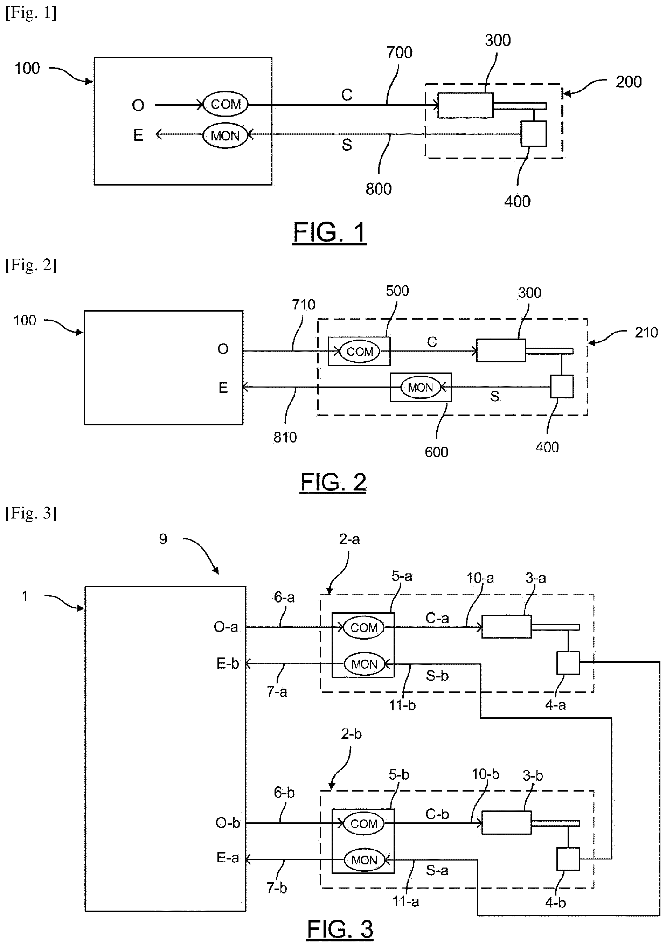

La [Fig.1] illustre un exemple de calculateur électronique 100 à interface analogique relié à un actionneur 200. L'actionneur 200 comprend un vérin 300, de type électrique ou hydraulique par exemple, ainsi qu'un ou plusieurs capteurs de mesure 400 du vérin 300, tels que des capteurs de position, d'effort, de courant et/ou de température.

De manière connue, le calculateur 100 comprend une fonction de commande COM et une fonction de surveillance MON, ces fonctions permettant d'assurer le pilotage de l'actionneur 200. La fonction de commande COM permet, à partir d'un ordre numérique O, par exemple « ouverture volet », d'élaborer une consigne analogique C, usuellement sous forme de tension, qui est transmise au vérin 300. La fonction de surveillance MON permet quant à elle, à partir d'une mesure analogique S transmise par le capteur 400, de calculer un état numérique E du vérin 300, par exemple « volet ouvert ».

En pratique, les fonctions de commande COM et de surveillance MON sont réalisées de manière indépendante. En particulier, elles sont mises en œuvre dans des zones du calculateur 100 séparées physiquement l'une de l'autre et basées sur des logiciels différents. Les données de commande et de surveillance sont en outre transmises entre le calculateur 100 et l'actionneur 200 via des lignes 700, 800 différentes. Ceci permet de respecter les principes de ségrégation et de dissimilarité pour garantir un haut niveau de sécurité à bord, notamment en cas de défaillance et/ou de panne.

De manière connue, comme illustré sur la [Fig.2], il a été proposé dans le cadre de calculateurs 100 à interface numérique de déporter les fonctions de commande COM et de surveillance MON de manière interne dans l'actionneur 210. Ainsi, l'actionneur 210 reçoit directement un ordre numérique O « ouverture volet » en provenance du calculateur 100 et lui fournit directement un état numérique E « volet ouvert ».

Les principes de ségrégation et de dissimilarité imposent d'intégrer dans l'actionneur 200 deux organes de calcul 500, 600 qui sont éloignés physiquement, l'un hébergeant la fonction de commande COM et l'autre la fonction de surveillance MON. Les organes de calcul 500,600 sont en outre de préférence de natures différentes.

Une telle solution présente l'inconvénient d'augmenter fortement la masse et l'encombrement des actionneurs 200, ainsi que leur complexité et leur consommation d'énergie.

Il est notamment connu par la demande de brevet WO2007018652A1 un système de commande informatique en temps réel avec des fonctions de récupération, dans lequel les actionneurs sont reliés chacun à une unité de commande et de surveillance associée via deux voies de calcul.

L'invention vise ainsi à éliminer au moins certains de ces inconvénients tout en respectant les impératifs de ségrégation et dissimilarité.

### PRESENTATION DE L'INVENTION

L'invention concerne un système de pilotage d'actionneurs dans un aéronef, ledit système de pilotage comprenant au moins un premier actionneur et un deuxième actionneur physiquement distants l'un de l'autre, chaque actionneur comprenant :
- un organe de déplacement,
- au moins un capteur de mesure d'au moins un paramètre physique de l'organe de déplacement sous la forme d'une mesure analogique, et
- un organe de calcul relié de manière interne à l'organe de déplacement et configuré pour être relié à au moins un calculateur électronique de l'aéronef,
- ledit organe de calcul comportant une fonction de commande de l'organe de déplacement, configurée pour transmettre une consigne analogique à l'organe de déplacement à partir d'un ordre numérique provenant du calculateur électronique.

L'invention est remarquable en ce que le capteur de mesure du premier actionneur est relié de manière externe à l'organe de calcul du deuxième actionneur, ledit organe de calcul du deuxième actionneur comportant également une fonction de surveillance de l'organe de déplacement du premier actionneur, configurée pour transmettre un état numérique de l'organe de déplacement du premier actionneur au calculateur électronique à partir de la mesure analogique du capteur de mesure du premier actionneur.

L'invention propose avantageusement de distribuer le pilotage d'un actionneur de manière innovante afin de pouvoir intégrer un unique organe de calcul dans l'actionneur, au lieu des deux organes de calcul distincts physiquement requis dans l'art antérieur, et pouvant être de natures différentes. L'intégration d'un unique organe de calcul permet avantageusement un gain de masse, de volume et de coût importants dans l'actionneur.

Le pilotage proposé par l'invention consiste à mettre en œuvre la fonction de commande de manière interne dans l'actionneur et la fonction de surveillance de manière externe, à savoir dans un autre actionneur. L'organe de calcul d'un actionneur assure ainsi deux fonctions : une fonction de commande du dudit actionneur et une fonction de surveillance d'un autre actionneur que celui auquel il appartient. Ainsi, les fonctions de commande et de surveillance traditionnellement ségrégées pour respecter les impératifs de sécurité en aéronautique sont mises en œuvre dans un même organe de calcul, ce qui va à l'encontre des pratiques connues de l'homme du métier. En pratique, les fonctions de commande et de surveillance de deux actionneurs différents sont astucieusement mises en œuvre par un même organe de calcul, les fonctions de commande et de surveillance d'un même actionneur étant mises en œuvre dans des organes de calcul distincts, appartenant à deux actionneurs différents. Ceci permet de respecter le principe de ségrégation.

Selon un aspect de l'invention, l'organe de calcul du deuxième actionneur est monobloc. Contrairement à l'art antérieur, l'invention ne nécessite pas de devoir prévoir deux organes de calcul ségrégés physiquement dans un actionneur, de manière à réduire la masse, le volume et le coût de l'actionneur. Pour respecter l'impératif de ségrégation, la surveillance d'un actionneur est réalisée par l'organe de calcul interne de l'actionneur, mais également l'organe de calcul interne d'un autre actionneur distinct.

Selon un aspect de l'invention, l'organe de déplacement de chaque actionneur est surveillé par l'organe de calcul d'au moins un autre actionneur que celui auquel il appartient. Grâce à l'invention, un unique organe de calcul est nécessaire dans chaque actionneur de l'aéronef au lieu de deux, ce qui permet de globalement réduire la masse et le volume liés aux actionneurs dans l'aéronef. Le pilotage des actionneurs est avantageusement simplifié.

De préférence, l'organe de déplacement de chaque actionneur est surveillé par l'organe de calcul d'un unique autre actionneur que celui auquel il appartient. Chaque actionneur est ainsi surveillé par une unique voie de surveillance, reliée à l'organe de calcul externe à l'aéronef, ce qui garantit un haut niveau de sécurité tout en limitant le nombre de câbles et de liaisons.

Selon un aspect de l'invention, le capteur de mesure du premier actionneur est également relié de manière interne à l'organe de calcul du premier actionneur, ledit organe de calcul du premier actionneur comportant également une fonction de surveillance de l'organe de déplacement du premier actionneur, configurée pour transmettre un état numérique de l'organe de déplacement du premier actionneur au calculateur à partir de la mesure analogique du capteur de mesure du premier actionneur. Le premier actionneur est avantageusement surveillé via deux voies de surveillance différentes indépendantes et ségrégées, ce qui augmente le niveau de sécurité en cas de panne et/ou de défaillance.

Selon un aspect de l'invention, le système de pilotage comporte au moins une paire de deux actionneurs et l'organe de déplacement de chaque actionneur de la paire est surveillé par l'organe de calcul de l'autre actionneur de la paire. La surveillance est ainsi mise en œuvre de manière croisée symétrique entre deux actionneurs. Une éventuelle défaillance d'un organe de calcul est ainsi susceptible d'entraîner la perte de la commande d'un actionneur et la perte de la surveillance de l'autre actionneur, mais pas des deux fonctions pour un même actionneur.

Selon un aspect de l'invention, le système de pilotage comporte au moins trois actionneurs formant un groupe ordonné consécutivement de manière circulaire et dans lequel, dans chaque actionneur du groupe :
- l'organe de déplacement est surveillé par l'organe de calcul de l'actionneur d'ordre suivant du groupe, et
- l'organe de calcul comporte une fonction de surveillance de l'organe de déplacement de l'actionneur d'ordre précédent du groupe.

Une telle surveillance en chaîne permet de respecter le principe de ségrégation tout en limitant le nombre de câbles et de liaisons, pour une surveillance simplifiée et économique.

Selon un aspect de l'invention, le système de pilotage comporte un ensemble d'au moins deux actionneurs dans lequel l'organe de déplacement de chaque actionneur de l'ensemble est surveillé par l'organe de calcul de chaque actionneur de l'ensemble. Chaque actionneur de l'ensemble est ainsi surveillé via de multiples voies de surveillance indépendantes et ségrégées pour un niveau de sécurité renforcé. En outre, démultiplier le nombre de voies de surveillance permet avantageusement d'identifier plus précisément l'origine et/ou l'emplacement de la panne/défaillance, qui peut intervenir au niveau de l'électronique d'acquisition, du câblage, des organes de calcul entre autres.

Selon un aspect de l'invention, le système de pilotage comporte en outre au moins un calculateur électronique d'aéronef, l'organe de calcul de chaque actionneur étant relié à l'au moins un calculateur électronique de manière à transmettre l'ordre numérique et l'état numérique dudit actionneur, de préférence via une unique ligne numérique de transmission. Une unique ligne de transmission par actionneur permet avantageusement de réduire le câblage tout en conservant une sécurité élevée. En effet, le principe de ségrégation est respecté car chaque ligne numérique de transmission permet le transfert des données de commande relatives à un actionneur et des données de surveillance relatives à un autre actionneur. Les données de commande et de surveillance relatives à un même actionneur sont réparties entre deux lignes numériques de transmission.

L'invention concerne également un aéronef comprenant un système de pilotage tel que décrit précédemment.

L'invention concerne également un procédé de pilotage d'actionneurs dans un aéronef mis en œuvre au moyen du système de pilotage tel que décrit précédemment, procédé dans lequel :
- l'organe de calcul du premier actionneur met en œuvre une étape de commande de l'organe de déplacement du premier actionneur, l'étape de commande consistant à transmettre une consigne analogique audit organe de déplacement à partir d'un ordre numérique provenant du calculateur électronique, et
- l'organe de calcul du deuxième actionneur met en œuvre une étape de surveillance de l'organe de déplacement du premier actionneur, l'étape de surveillance consistant à transmettre un état numérique dudit organe de déplacement au calculateur électronique à partir de la mesure analogique du capteur de mesure du premier actionneur.

Le pilotage est ainsi mis en œuvre au moyen de plusieurs organes de calcul appartenant à différents actionneurs. Une telle segmentation des fonctions de pilotage, à savoir la commande et la surveillance, permet de respecter le principe de ségrégation avec une architecture d'actionneur simplifiée ne nécessitant qu'un seul organe de calcul.

De préférence, l'organe de calcul du premier actionneur met également en œuvre une étape de surveillance de l'organe de déplacement du premier actionneur. Ceci permet d'avoir deux voies de surveillance indépendantes pour une sécurité accrue.

De préférence, l'organe de calcul d'un troisième actionneur met également en œuvre une étape de surveillance de l'organe de déplacement du premier actionneur. Ceci permet d'avoir trois voies de surveillance indépendantes pour une sécurité accrue et une détection plus précise de la localisation d'une éventuelle défaillance.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique du pilotage d'un actionneur au moyen d'un calculateur à interface analogique dans un aéronef selon l'art antérieur.
La [Fig.2] est une représentation schématique d'un actionneur équipé d'organes de calcul internes pour son pilotage et relié à un calculateur à interface numérique dans un aéronef selon l'art antérieur.
La [Fig.3] est une représentation schématique d'un système de pilotage d'une paire d'actionneurs dans un aéronef selon une forme de réalisation de l'invention.
La [Fig.4] est une représentation schématique d'un système de pilotage d'un groupe ordonné d'actionneurs de manière circulaire dans un aéronef selon une autre forme de réalisation de l'invention.
La [Fig.5] est une représentation schématique d'un système de pilotage avec une ligne numérique de commande et de surveillance vers le calculateur selon une autre forme de réalisation de l'invention.
La [Fig.6] est une représentation schématique d'un système de pilotage avec deux voies de surveillance selon une autre forme de réalisation de l'invention.
La [Fig.7] est une représentation schématique d'un système de pilotage avec trois voies de surveillance selon une autre forme de réalisation de l'invention.
La [Fig.8] est une représentation schématique du système de pilotage de la [Fig.3] en cas de défaillance d'un organe de calcul d'un actionneur.
La [Fig.9] est une représentation schématique du système de pilotage de la [Fig.5] en cas de défaillance de la ligne numérique de commande et de surveillance vers le calculateur.
La [Fig.10] est une représentation schématique du système de pilotage de la [Fig.7] en cas de défaillance d'un capteur de mesure d'un actionneur.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne un système et un procédé de pilotage d'actionneurs dans un aéronef.

En référence à la [Fig.3], un aéronef, par exemple un avion, un hélicoptère ou un dirigeable, comporte un ensemble d'actionneurs 2, notamment dédiés à la commande de vol et au déplacement des surfaces mobiles de l'aéronef, telles que la gouverne ou l'orientation des pales d'un hélicoptère. L'aéronef comprend également un ensemble de calculateurs électroniques 1 reliés aux actionneurs 2 afin de permettre leur pilotage. Dans l'exemple de la [Fig.3], un premier actionneur 2-a et un deuxième actionneur 2-b sont représentés, reliés chacun à un même calculateur électronique 1. Le nombre de calculateurs électroniques 1 dans le cadre de l'invention est quelconque.

Comme illustré sur la [Fig.3], chaque actionneur 2 comporte un organe de déplacement 3, par exemple un vérin électrique ou hydraulique, ainsi qu'un ou plusieurs capteurs de mesure 4 (un seul représenté sur la [Fig.3]), tels que des capteurs de position, d'effort, de courant et/ou de température. L'organe de déplacement 3 est configuré pour se déplacer en réponse à une consigne analogique C de déplacement, notamment sous forme de tension électrique. Chaque capteur de mesure 4 est quant à lui configuré pour mesurer un paramètre physique, sous la forme d'une mesure analogique S, de l'organe de déplacement 3 de l'actionneur 2 dans lequel il est monté. Il peut être prévu plusieurs capteurs de mesure 4 pour réaliser plusieurs mesures d'un même paramètre de l'organe de déplacement 3. Il peut également être prévu plusieurs capteurs de mesure 4 pour mesurer différents paramètres de l'organe de déplacement 3.

Comme illustré sur la [Fig.3], chaque actionneur 2 comporte également un organe de calcul 5, qui est relié à l'organe de déplacement 3 de l'actionneur 2 auquel il appartient ainsi qu'à un calculateur électronique 1. L'organe de calcul 5 est ainsi un élément de l'actionneur 2, distinct du calculateur électronique 1. Une liaison interne à l'actionneur 2 relie l'organe de calcul 5 à l'organe de déplacement 3. Une liaison externe à l'actionneur 2 relie l'organe de calcul 5 au calculateur électronique 1. Les liaisons sont de préférence filaires. La liaison externe se présente à titre d'exemples non limitatifs sous la forme d'une liaison point à point ou d'un bus. L'organe de calcul 5 se présente à titre d'exemple sous la forme d'un processeur.

En référence à la [Fig.3], l'organe de calcul 5 comporte une fonction de commande COM de l'organe de déplacement 3, à savoir une voie de calcul connue sous le terme anglais « Computation », qui est configurée pour transmettre une consigne analogique C à l'organe de déplacement 3, à partir d'un ordre numérique O provenant du calculateur électronique 1. Le calculateur électronique 1 est de type à interface numérique. Le calculateur électronique 1 est configuré pour transmettre un ordre numérique O à l'organe de calcul 5 via la liaison externe, dénommée par la suite « ligne numérique de commande 6 ». L'ordre numérique O se présente à titre d'exemple sous la forme d'une consigne de pilotage de l'actionneur 2, telle que « ouverture volet ». L'organe de calcul 5 est configuré pour convertir l'ordre numérique O en la consigne analogique C. La consigne analogique C est transmise à l'organe de déplacement 3 via la liaison interne, dénommée par la suite « ligne analogique de commande 10 ».

Selon l'invention et comme illustré sur la [Fig.3], l'invention concerne un système de pilotage 9 comprenant une pluralité d'actionneurs 2 distants physiquement les uns des autres, dont au moins un premier actionneur 2-a et un deuxième actionneur 2-b, dans lequel :
- le capteur de mesure 4-a du premier actionneur 2-a est relié de manière externe à l'organe de calcul 5-b du deuxième actionneur 2-b, et
- l'organe de calcul 5-b du deuxième actionneur 2-b comporte également une fonction de surveillance MON de l'organe de déplacement 3-a du premier actionneur 2-a, configurée pour transmettre un état numérique E-a de l'organe de déplacement 3-a du premier actionneur 2-a au calculateur 1 à partir de la mesure analogique S-a du capteur de mesure 4-a du premier actionneur 2-a.

La fonction de surveillance MON est une voie de calcul connue sous le terme anglais « Monitoring », qui permet de contrôler la fonction de commande COM afin de détecter une éventuelle défaillance. Les fonctions de commande COM et de surveillance MON sont des voies de calcul différentes, à savoir basées sur des logiciels différents, pour respecter le principe de dissimilarité. Les fonctions de commande COM et de surveillance MON permettent ensemble d'assurer le pilotage d'un actionneur 2.

Comme illustré sur la [Fig.3], l'organe de calcul 5-b du deuxième actionneur 2-b comporte à la fois une fonction de commande COM et une fonction de surveillance MON, la première étant relative au premier actionneur 2-a tandis que la deuxième est relative au deuxième actionneur 2-b. Concernant le premier actionneur 2-a, la fonction de commande COM et la fonction de surveillance MON sont ainsi mises en œuvre dans deux organes de calcul 5-a, 5-b différents, à savoir celui du premier actionneur 2-a pour la première et celui du deuxième actionneur 2-b pour la deuxième. Les organes de calcul 5-a, 5-b appartiennent en outre à des actionneurs 2-a, 2-b distants physiquement, à savoir sans contact l'un avec l'autre. Ceci permet avantageusement de réduire la masse et le volume des actionneurs 2-a, 2-b, en limitant le nombre d'organes de calcul 5 nécessaires, tout en préservant le principe de ségrégation.

En pratique, comme illustré sur la [Fig.3], une ligne analogique de surveillance externe 11-a relie le capteur de mesure 4-a du premier actionneur 2-a à l'organe de calcul 5-b du deuxième actionneur 2-b pour transmettre la mesure analogique S-a du capteur de mesure 4-a du premier actionneur 2-a. Une ligne numérique de surveillance 7-b relie de plus l'organe de calcul 5-b du deuxième actionneur 2-b au calculateur électronique 1 pour transmettre l'état numérique E-a de l'organe de déplacement 3-a du premier actionneur 2-a. L'état numérique E-a transmis par le deuxième actionneur 2-b permet au calculateur électronique 1 de contrôler l'exécution de l'ordre numérique O-a transmis au premier actionneur 2-a. Les lignes sont de préférence filaires. Dans le cas de plusieurs capteurs 4-a dans le premier actionneur 2-a, chacun est relié à l'organe de calcul 5-b du deuxième actionneur 2-b.

La forme de réalisation de la [Fig.3] illustre un système de pilotage 9 comportant un premier actionneur 2-a et un deuxième actionneur 2-b formant ensemble une paire aux fins de la surveillance. L'organe de calcul 5-a du premier actionneur 2-a de la paire surveille l'organe de déplacement 3-b du deuxième actionneur 2-b de la paire et inversement. Chaque organe de calcul 5-a, 5-b de la paire comporte ainsi une fonction de commande COM de l'actionneur 2-a, 2-b de la paire auquel il appartient et une fonction de surveillance MON de l'autre actionneur 2-a, 2-b de la paire. Le fonctionnement du premier actionneur 2-a est symétrique à celui du deuxième actionneur 2-b.

Comme illustré sur la [Fig.3], le capteur de mesure 4-a, 4-b de chaque actionneur 2-a, 2-b de la paire transmet une mesure analogique S-a, S-b respectivement à l'organe de calcul 5-b, 5-a de l'autre actionneur 2-b, 2-a de la paire via une ligne analogique de surveillance externe 11-a, 11-b. L'organe de calcul 5-a, 5-b de chaque actionneur 2-a, 2-b de la paire transmet au calculateur électronique 1 un état numérique E-b, E-a de l'organe de déplacement 3-b, 3-a de l'autre actionneur 2-b, 2-a de la paire. Un tel système de pilotage 9 permet de ne prévoir qu'un organe de calcul 5-a, 5-b par actionneur 2-a, 2-b. La fonction de commande COM et la fonction de surveillance MON réalisées dans un même actionneur 5-a, 5-b n'ont avantageusement pas besoin d'être ségrégées.

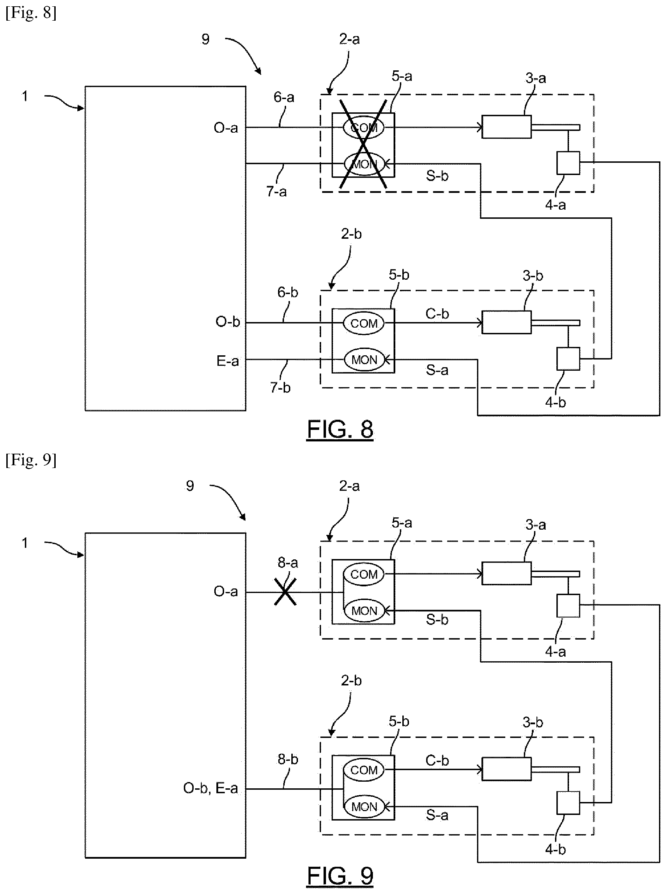

La [Fig.8] illustre le système de pilotage 9 de la [Fig.3] en présence d'une défaillance au niveau de l'organe de calcul 5-a du premier actionneur 2-a. Il en résulte qu'une consigne analogique C-a n'est pas transmise ou est transmise de manière incorrecte à l'organe de déplacement 3-a. De plus, un état numérique E-b de l'organe de déplacement 3-b du deuxième actionneur 2-b n'est pas transmis ou est transmis de manière incorrecte au calculateur électronique 1. Ainsi, une telle défaillance affecte la commande du premier actionneur 2-a et la surveillance du deuxième actionneur 2-b. La commande du deuxième actionneur 2-b et la surveillance du premier actionneur 2-a sont avantageusement préservées, ce qui permet de conserver un pilotage partiel de chaque actionneur 2-a, 2-b.

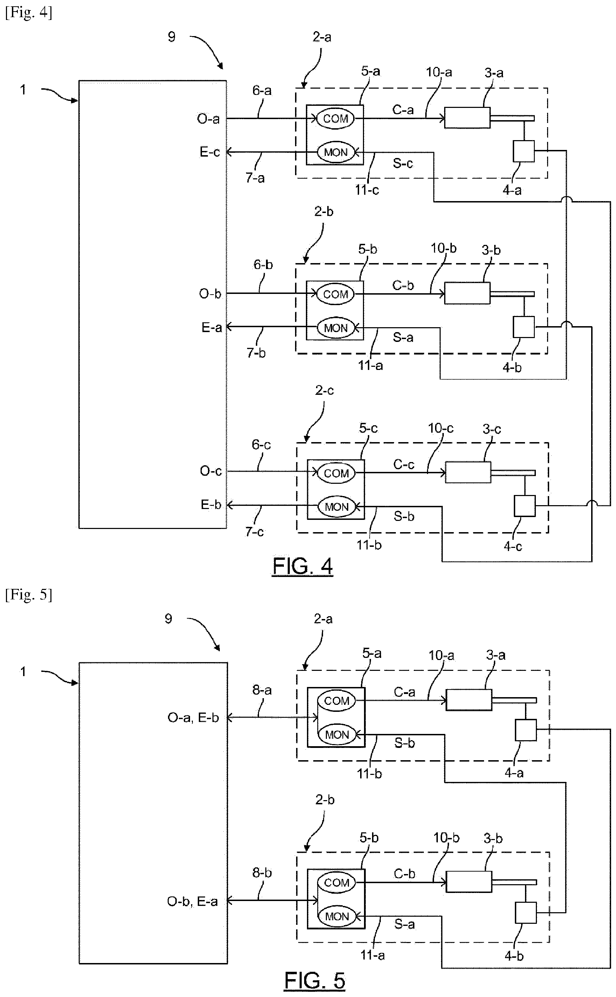

La forme de réalisation de la [Fig.4] illustre un système de pilotage 9 comportant un groupe d'actionneurs 2-a, 2-a, 2-c qui sont ordonnés consécutivement de manière circulaire pour permettre une surveillance en série. Dans chaque actionneur 2-a, 2-b, 2-c du groupe, l'organe de déplacement 3-a, 3-b, 3-c est surveillé par l'organe de calcul 5-a, 5-b, 5-c de l'actionneur 2-a, 2-b, 2-c d'ordre suivant du groupe. Également dans chaque actionneur 2-a, 2-b, 2-c du groupe, l'organe de calcul 3-a, 3-b, 3-c comporte une fonction de surveillance MON de l'organe de déplacement 3-a, 3-b, 3-c de l'actionneur 2-a, 2-b, 2-c d'ordre précédent du groupe.

Dans l'exemple de la [Fig.4], le groupe est formé par trois actionneurs 2-a, 2-b, 2-c ordonnés suivant l'ordre suivant : un premier actionneur 2-a, un deuxième actionneur 2-b puis un troisième actionneur 2-c. A titre d'exemple, pour le deuxième actionneur 2-b, l'actionneur d'ordre suivant est le troisième actionneur 2-c et l'actionneur d'ordre précédent est le premier actionneur 2-a. L'ordre est de type circulaire, à savoir que l'actionneur de premier ordre est consécutif à l'actionneur de dernier ordre. A titre d'exemple, pour le troisième actionneur 2-c, l'actionneur d'ordre suivant est le premier actionneur 2-a.

Dans l'exemple de la [Fig.4], une ligne analogique de surveillance externe 11-a, 11-b, 11-c relie chaque capteur de mesure 4-a, 4-b, 4-c à l'organe de calcul 5-a, 5-b, 5-c de l'actionneur 2-a, 2-b, 2-c d'ordre suivant. Ainsi, le premier actionneur 2-a surveille le troisième actionneur 2-c et est surveillé par le deuxième actionneur 2-b, lui-même surveillé par le troisième actionneur 2-c. Ceci permet de former une chaîne de surveillance en série dans laquelle chaque organe de calcul 5-a, 5-b, 5-c comporte à la fois une fonction de commande COM et une fonction de surveillance MON, la fonction de surveillance MON étant relative à un autre actionneur 2-a, 2-b, 2-c que celui auquel il appartient.

La description préalable s'applique également pour un groupe ordonné comportant davantage d'actionneurs 2. Le nombre maximal d'actionneurs 2 dans le groupe ordonné n'est pas limité. Le nombre minimal d'actionneurs 2 dans le groupe ordonné est égal à deux et correspond à la forme de réalisation illustrée sur la [Fig.3]. Le fonctionnement en groupe ordonné présente de plus les mêmes avantages qu'un fonctionnement par paire dans le cas d'une défaillance, telle que celle illustrée sur la [Fig.8]

On précise que les formes de réalisation illustrées sur les figures 3 et 4 sont combinables, à savoir que le système de pilotage 9 peut comporter une ou plusieurs paires d'actionneurs 2 différentes et/ou un ou plusieurs groupes ordonnés d'actionneurs 2 différents, comportant chacun un nombre pluriel quelconque d'actionneurs 2.

La forme de réalisation de la [Fig.5] se différencie de celle de la [Fig.3] en ce que la ligne numérique de commande 6 et la ligne numérique de surveillance 7 reliant l'organe de calcul 5 d'un actionneur 2 au calculateur électronique 1 sont fusionnées pour former une ligne numérique de commande et de surveillance 8. L'ordre numérique O provenant du calculateur électronique 1 et l'état numérique E provenant de l'organe de calcul 5 de l'actionneur 2 sont tous deux transmis via la ligne numérique de commande et de surveillance 8.

Ceci permet avantageusement de réduire le nombre de lignes numériques, en pratique de moitié au maximum, tout en préservant le principe de ségrégation. En effet, l'ordre numérique O et l'état numérique E transmis dans une même ligne numérique 8 sont relatifs aux organes de déplacement 3 de deux actionneurs 2 différents. Par exemple, la ligne numérique de commande et de surveillance 8-a reliée au premier actionneur 2-a permet de transmettre l'ordre numérique O-a relatif à l'organe de déplacement 3-a du premier actionneur 2-a ainsi que l'état numérique E-a relatif à l'organe de déplacement 3-b du deuxième actionneur 2-b.

La [Fig.9] illustre le système de pilotage 9 de la [Fig.5] en présence d'une défaillance au niveau de la ligne numérique de commande et de surveillance 8-a reliée au premier actionneur 2-a. Il en résulte qu'un ordre numérique O-a relatif au premier actionneur 2-a n'est pas transmis ou est transmis de manière incorrecte à l'organe de calcul 5-a. De plus, un état numérique E-b de l'organe de déplacement 3-b du deuxième actionneur 2-b n'est pas transmis ou est transmis de manière incorrecte au calculateur électronique 1. Ainsi, une telle défaillance affecte la commande du premier actionneur 2-a et la surveillance du deuxième actionneur 2-b. La commande du deuxième actionneur 2-b et la surveillance du premier actionneur 2- sont avantageusement préservées, ce qui permet de conserver un pilotage partiel de chaque actionneur 2-a, 2-b.

Il va de soi qu'une ligne numérique de commande 8-a, 8-b peut être prévue pour tout ou partie des actionneurs 2-a, 2-b de chaque paire et/ou groupe ordonné du système de pilotage 9.

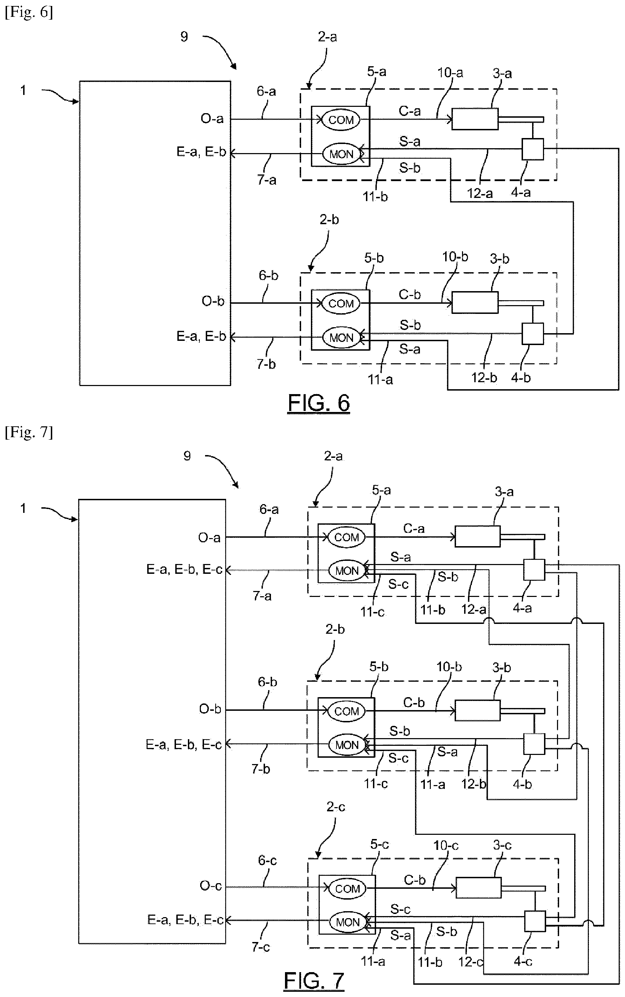

La forme de réalisation de la [Fig.6] se différencie de celle de la [Fig.3] en ce qu'elle comporte une double voie de surveillance du premier actionneur 2-a et du deuxième actionneur 2-b. Comme illustré sur la [Fig.6], le capteur de mesure 4-a, 4-b de chaque actionneur 2-a, 2-b est également relié via une ligne analogique de surveillance interne 12-a, 12-b à l'organe de calcul 5-a, 5-b de l'actionneur 2-a, 2-b auquel il appartient. L'organe de calcul 5-a, 5-b de chaque actionneur 2-a, 2-b comporte deux fonctions de surveillance MON différentes, à savoir une première relative au premier actionneur 2-a et une deuxième relative au deuxième actionneur 2-b. Autrement dit, la fonction de surveillance MON relative au premier actionneur 2-a est mise en œuvre à la fois dans l'organe de calcul 5-a, 5-b du premier actionneur 2-a et du deuxième actionneur 2-b. De même pour la fonction de surveillance MON relative au premier actionneur 2-a.

Une double voie de surveillance présente l'avantage d'augmenter la redondance de données et ainsi limiter le risque de pertes de pilotage en présence d'une défaillance. Un autre avantage est qu'elle permet de faciliter la détection de l'emplacement de la défaillance. Dans l'exemple de la [Fig.6], une double voie de surveillance a été prévue de manière symétrique pour les deux actionneurs 2-a, 2-b de la paire. Il va cependant de soi qu'une double voie de surveillance pourrait être prévue uniquement pour une partie des actionneurs 2-a, 2-b. De plus, une double voie de surveillance pourrait également être prévue pour un groupe ordonné d'actionneurs 2.

La forme de réalisation de la [Fig.7] se différencie de celle de la [Fig.4] en ce qu'elle comporte une triple voie de surveillance de chaque actionneur 2-a, 2-b, 2-c du groupe ordonné. Comme illustré sur la [Fig.7], le capteur de mesure 4-a, 4-b, 4-c de chaque actionneur 2-a, 2-b, 2-c est relié via une ligne analogique de surveillance interne/ externe 11-a, 11-b, 11-c, 12-a, 12-b, 12-c à l'organe de calcul 5-a, 5-b, 5-c de chaque actionneur 2-a, 2-b, 2-c. Chaque organe de calcul 5-a, 5-b, 5-c comporte ainsi trois fonctions de surveillance MON différentes, à savoir une relative à chaque actionneur 2-a, 2-b, 2-c.

Le nombre maximal de voies de surveillance est déterminé par le nombre d'actionneurs 2 du groupe ordonné, à savoir trois dans cet exemple. Dans une paire, le nombre maximal de voies de surveillance est égal à deux et correspond à l'exemple illustré sur la [Fig.6]. Un système de pilotage 9 équipé de multiples voies de surveillance présente l'avantage de démultiplier la redondance de données et ainsi limiter le risque de pertes de pilotage en présence d'une défaillance. Un autre avantage est qu'elle permet de détecter l'emplacement de la défaillance. Il est ainsi possible d'adapter le pilotage des actionneurs 2-a, 2-b, 2-c en conséquence.

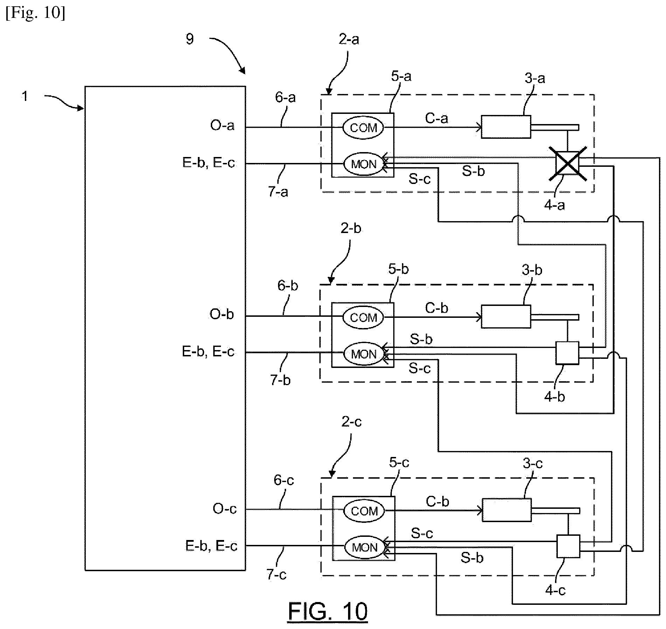

La [Fig.10] illustre un exemple de défaillance facilement identifiable grâce aux multiples voies de surveillance. Dans cet exemple, le calculateur électronique 1 ne reçoit l'état numérique E-a relatif au premier actionneur 2-a de la part d'aucun organe de calcul 5-a, 5-b, 5-c. L'emplacement de la défaillance ne peut pas être un organe de calcul 5-a, 5-c, 5-c car chacun transmet l'état numérique E-b, E-c relatif aux deuxième et troisième actionneurs 2-b, 2-c. Il en résulte que la défaillance provient du capteur de mesure 4-a du premier actionneur 2-a. Les organes de calcul 5-a, 5-b, 5-c peuvent donc continuer d'être utilisés en toute sécurité pour le pilotage.

L'invention concerne également un procédé de pilotage d'actionneurs comportant une étape de commande et une étape de surveillance de l'organe de déplacement 3-a d'un premier actionneur 2-a d'un système de pilotage 9 d'aéronef tel que décrit précédemment. Comme illustré sur les figures 3 à 7, lors de l'étape de commande, l'organe de calcul 5-a du premier actionneur 2-a transmet une consigne analogique C-a à l'organe de déplacement 3-a à partir d'un ordre numérique O-a provenant du calculateur électronique 1.

Comme illustré sur les figures 3 à 7, lors de l'étape de surveillance, l'organe de calcul 5-b d'un deuxième actionneur 2-b, distant physiquement du premier actionneur 2-a, transmet au calculateur 1 un état numérique E-a de l'organe de déplacement 3-a à partir de la mesure analogique S-a du capteur de mesure 4-a du premier actionneur 2-a. Autrement dit, l'étape de surveillance est assurée par un autre actionneur 2-b que celui auquel appartient l'organe de déplacement 3-a surveillé.

Selon un aspect préféré illustré sur les figures 6 et 7, l'étape de surveillance est également, de manière redondante, mise en œuvre par l'organe de calcul 5-a auquel appartient l'organe de déplacement 3-a. Préférentiellement et comme illustré sur la [Fig.7], l'étape de surveillance est également, de manière redondante, mise en œuvre par l'organe de calcul 5-a, 5-b, 5-c de chaque actionneur 2-a, 2-b, 2-c d'un groupe ordonné. Ceci permet avantageusement d'avoir une double surveillance, augmentant la redondance des données et permettant de faciliter la détection d'une éventuelle défaillance.

## Revendications

1. Système de pilotage (9) d'actionneurs dans un aéronef, ledit système de pilotage (9) comprenant au moins un premier actionneur (2-a) et un deuxième actionneur (2-b) physiquement distants l'un de l'autre, chaque actionneur (2-a, 2-b) comprenant :
• un organe de déplacement (3-a, 3-b),
• au moins un capteur de mesure (4-a, 4-b) d'au moins un paramètre physique de l'organe de déplacement (3-a, 3-b) sous la forme d'une mesure analogique (S-a, S-b), et
• un organe de calcul (5-a, 5-b) relié de manière interne à l'organe de déplacement (3-a, 3-b) et configuré pour être relié à au moins un calculateur électronique (1) de l'aéronef,
• ledit organe de calcul (5-a, 5-b) comportant une fonction de commande (COM) de l'organe de déplacement (3-a, 3-b), configurée pour transmettre une consigne analogique (C-a, C-b) à l'organe de déplacement (3-a, 3-b) à partir d'un ordre numérique (O-a, O-b) provenant du calculateur électronique (1),
• système de pilotage (9) **caractérisé par le fait que** le capteur de mesure (4-a) du premier actionneur (2-a) est relié de manière externe à l'organe de calcul (5-b) du deuxième actionneur (2-b),
• ledit organe de calcul (5-b) du deuxième actionneur (2-b) comportant également une fonction de surveillance (MON) de l'organe de déplacement (3-a) du premier actionneur (2-a), configurée pour transmettre un état numérique (E-a) de l'organe de déplacement (3-a) du premier actionneur (2-a) au calculateur électronique (1) à partir de la mesure analogique (S-a) du capteur de mesure (4-a) du premier actionneur (2-a).

2. Système de pilotage (9) selon la revendication 1, dans lequel l'organe de calcul (5-b) du deuxième actionneur (2-b) est monobloc.

3. Système de pilotage (9) selon l'une des revendications 1 et 2, dans lequel l'organe de déplacement (3-a, 3-b) de chaque actionneur (2-a, 2-b) est surveillé par l'organe de calcul (5-a, 5-b) d'au moins un autre actionneur (2-a, 2-b) que celui auquel il appartient, de préférence d'un unique.

4. Système de pilotage (9) selon l'une des revendications 1 à 3, dans lequel :
• le capteur de mesure (4-a) du premier actionneur (2-a) est également relié de manière interne à l'organe de calcul (5-a) du premier actionneur (2-a),
• ledit organe de calcul (5-a) du premier actionneur (2-a) comporte également une fonction de surveillance (MON) de l'organe de déplacement (3-a) du premier actionneur (2-a), configurée pour transmettre un état numérique (E-a) de l'organe de déplacement (3-a) du premier actionneur (2-a) au calculateur (1) à partir de la mesure analogique (S-a) du capteur de mesure (4-a) du premier actionneur (2-a).

5. Système de pilotage (9) selon l'une des revendications 1 à 4, comportant au moins une paire de deux actionneurs (2-a, 2-b) et dans lequel l'organe de déplacement (3-a, 3-b) de chaque actionneur (2-a, 2-b) de la paire est surveillé par l'organe de calcul (5-a, 5-b) de l'autre actionneur (2-a, 2-b) de la paire.

6. Système de pilotage (9) selon l'une des revendications 1 à 5, comportant au moins trois actionneurs (2-a, 2-b, 2-c) formant un groupe ordonné consécutivement de manière circulaire et dans lequel, dans chaque actionneur (2-a, 2-b, 2-c) du groupe :
• l'organe de déplacement (3-a, 3-b, 3-c) est surveillé par l'organe de calcul (5-a, 5-b, 5-c) de l'actionneur (2-a, 2-b, 2-c) d'ordre suivant du groupe, et
• l'organe de calcul (3-a, 3-b, 3-c) comporte une fonction de surveillance (MON) de l'organe de déplacement (3-a, 3-b, 3-c) de l'actionneur (2-a, 2-b, 2-c) d'ordre précédent du groupe.

7. Système de pilotage (9) selon l'une des revendications 1 à 6, comportant un ensemble d'au moins deux actionneurs (2-a, 2-b, 2-c) dans lequel l'organe de déplacement (3-a, 3-b, 3-c) de chaque actionneur (2-a, 2-b, 2-c) de l'ensemble est surveillé par l'organe de calcul (5-a, 5-b, 5-c) de chaque actionneur (2-a, 2-b, 2-c) de l'ensemble.

8. Système de pilotage (9) selon l'une des revendications 1 à 7, comportant en outre au moins un calculateur électronique (1) d'aéronef, l'organe de calcul (5-a, 5-b, 5-c) de chaque actionneur (2-a, 2-b, 2-c) étant relié à l'au moins un calculateur électronique (1) de manière à transmettre l'ordre numérique (O-a, O-b, O-c) et l'état numérique (E-a, E-b, E-c) dudit actionneur (2-a, 2-b, 2-c), de préférence via une unique ligne numérique de commande et de surveillance (8-a, 8-b, 8-c).

9. Aéronef comprenant un système de pilotage (9) selon l'une des revendications 1 à 8.

10. Procédé de pilotage d'actionneurs dans un aéronef mis en œuvre au moyen du système de pilotage (9) selon l'une des revendications 1 à 8, procédé dans lequel :
• l'organe de calcul (5-a) du premier actionneur (2-a) met en œuvre une étape de commande de l'organe de déplacement (3-a) du premier actionneur (2-a), l'étape de commande consistant à transmettre une consigne analogique (C-a) audit organe de déplacement (3-a) à partir d'un ordre numérique (O-a) provenant du calculateur électronique (1), et
• l'organe de calcul (5-b) du deuxième actionneur (2-b) met en œuvre une étape de surveillance de l'organe de déplacement (3-a) du premier actionneur (2-a), l'étape de surveillance consistant à transmettre un état numérique (E-a) dudit organe de déplacement (3-a) au calculateur électronique (1) à partir de la mesure analogique (S-a) du capteur de mesure (4-a) du premier actionneur (2-a).

## Patentansprüche

1. System (9) zur Steuerung von Aktuatoren in einem Flugzeug, wobei das Steuerungssystem (9) mindestens einen ersten Aktuator (2-a) und einen zweiten Aktuator (2-b) umfasst, die physisch voneinander entfernt sind, wobei jeder Aktuator (2-a, 2-b) umfasst:
• ein Verlagerungselement (3-a, 3-b),
• mindestens einen Messfühler (4-a, 4-b) für mindestens einen physikalischen Parameter des Verlagerungselements (3-a, 3-b) in Form einer analogen Messung (S-a, S-b) und
• ein Rechenelement (5-a, 5-b), das intern mit dem Verlagerungselement (3-a, 3-b) verbunden und ausgelegt ist, um mit mindestens einem elektronischen Rechner (1) des Flugzeugs verbunden zu sein,
• wobei das Rechenelement (5-a, 5-b) eine Steuerfunktion (COM) des Verlagerungselements (3-a, 3-b) aufweist, die zur Übertragung eines analogen Sollwerts (C-a, C-b) an das Verlagerungselement (3-a, 3-b) aus einem digitalen Befehl (O-a, O-b) des elektronischen Rechners (1) ausgelegt ist,
• wobei das Steuerungssystem (9) **dadurch gekennzeichnet ist, dass** der Messfühler (4-a) des ersten Aktuators (2-a) extern mit dem Rechenelement (5-b) des zweiten Aktuators (2-b) verbunden ist,
• wobei das Rechenelement (5-b) des zweiten Aktuators (2-b) ebenfalls eine Überwachungsfunktion (MON) des Verlagerungselements (3-a) des ersten Aktuators (2-a) aufweist, die zur Übertragung eines digitalen Zustands (E-a) des Verlagerungselements (3-a) des ersten Aktuators (2-a) aus der analogen Messung (S-a) des Messfühlers (4-a) des ersten Aktuators (2-a) an den elektronischen Rechner (1) ausgelegt ist.

2. Steuerungssystem (9) nach Anspruch 1, wobei das Rechenelement (5-b) des zweiten Aktuators (2-b) einteilig ist.

3. Steuerungssystem (9) nach einem der Ansprüche 1 und 2, wobei das Verlagerungselement (3-a, 3-b) jedes Aktuators (2-a, 2-b) von dem Rechenelement (5-a, 5-b) mindestens eines anderen Aktuators (2-a, 2-b) als dem, zu dem es gehört, vorzugsweise von einem einzigen, überwacht wird.

4. Steuerungssystem (9) nach einem der Ansprüche 1 bis 3, wobei:
• der Messfühler (4-a) des ersten Aktuators (2-a) ebenfalls intern mit dem Rechenelement (5-a) des ersten Aktuators (2-a) verbunden ist,
• das Rechenelement (5-a) des ersten Aktuators (2-a) ebenfalls eine Überwachungsfunktion (MON) des Verlagerungselements (3-a) des ersten Aktuators (2-a) aufweist, die zur Übertragung eines digitalen Zustands (E-a) des Verlagerungselements (3-a) des ersten Aktuators (2-a) aus der analogen Messung (S-a) des Messfühlers (4-a) des ersten Aktuators (2-a) an den Rechner (1) ausgelegt ist.

5. Steuerungssystem (9) nach einem der Ansprüche 1 bis 4, das mindestens ein Paar von zwei Aktuatoren (2-a, 2-b) aufweist und wobei das Verlagerungselement (3-a, 3-b) jedes Aktuators (2-a, 2-b) des Paares von dem Rechenelement (5-a, 5-b) des anderen Aktuators (2-a, 2-b) des Paares überwacht wird.

6. Steuerungssystem (9) nach einem der Ansprüche 1 bis 5, das mindestens drei Aktuatoren (2-a, 2-b, 2-c) aufweist, die eine konsekutiv kreisförmig angeordnete Gruppe bilden und wobei in jedem Aktuator (2-a, 2-b, 2-c) der Gruppe:
• das Verlagerungselement (3-a, 3-b, 3-c) von dem Rechenelement (5-a, 5-b, 5-c) des darauffolgenden Aktuators (2-a, 2-b, 2-c) der Gruppe überwacht wird, und
• das Rechenelement (3-a, 3-b, 3-c) eine Überwachungsfunktion (MON) des Verlagerungselements (3-a, 3-b, 3-c) des vorhergehenden Aktuators (2-a, 2-b, 2-c) der Gruppe aufweist.

7. Steuerungssystem (9) nach einem der Ansprüche 1 bis 6, das eine Anordnung von mindestens zwei Aktuatoren (2-a, 2-b, 2-c) aufweist, wobei das Verlagerungselement (3-a, 3-b, 3-c) jedes Aktuators (2-a, 2-b, 2-c) der Anordnung von dem Rechenelement (5-a, 5-b, 5-c) jedes Aktuators (2-a, 2-b, 2-c) der Anordnung überwacht wird.

8. Steuerungssystem (9) nach einem der Ansprüche 1 bis 7, das ferner mindestens einen elektronischen Flugzeugrechner (1) aufweist, wobei das Rechenelement (5-a, 5-b, 5-c) jedes Aktuators (2-a, 2-b, 2-c) mit dem mindestens einen elektronischen Rechner (1) derart verbunden ist, dass der digitale Befehl (O-a, O-b, O-c) und der digitale Zustand (E-a, E-b, E-c) des Aktuators (2-a, 2-b, 2-c) vorzugsweise über eine einzige digitale Steuer- und Überwachungsleitung (8-a, 8-b, 8-c) übertragen werden.

9. Flugzeug, umfassend ein Steuerungssystem (9) nach einem der Ansprüche 1 bis 8.

10. Verfahren zur Steuerung von Aktuatoren in einem Flugzeug, das mittels des Steuerungssystems (9) nach einem der Ansprüche 1 bis 8 durchgeführt wird, wobei bei dem Verfahren:
• das Rechenelement (5-a) des ersten Aktuators (2-a) einen Steuerschritt des Verlagerungselements (3-a) des ersten Aktuators (2-a) ausführt, wobei der Steuerschritt darin besteht, einen analogen Sollwert (C-a) an das Verlagerungselement (3-a) aus einem digitalen Befehl (O-a) des elektronischen Rechners (1) zu übertragen, und
• das Rechenelement (5-b) des zweiten Aktuators (2-b) einen Überwachungsschritt des Verlagerungselements (3-a) des ersten Aktuators (2-a) durchführt, wobei der Überwachungsschritt darin besteht, einen digitalen Zustand (E-a) des Verlagerungselements (3-a) an den elektronischen Rechner (1) aus der analogen Messung (S-a) des Messfühlers (4-a) des ersten Aktuators (2-a) zu übertragen.

## Claims

1. An actuator control system (9) in an aircraft, said control system (9) comprising at least a first actuator (2-a) and a second actuator (2-b) physically distant from each other, each actuator (2-a, 2-b) comprising:
- a movement member (3-a, 3-b),
- at least one sensor (4-a, 4-b) for measuring at least one physical parameter of the movement member (3-a, 3-b) in the form of an analogue measurement (S-a, S-b), and
- a computing member (5-a, 5-b) internally connected to the movement member (3-a, 3-b) and configured to be connected to at least one electronic computer (1) of the aircraft,
- said computing member (5-a, 5-b) comprising a function (COM) for controlling the movement member (3-a, 3-b), configured to transmit an analogue setpoint (C-a, C-b) to the movement member (3-a, 3-b) on the basis of a digital command (O-a, O-b) coming from the electronic computer (1),
- the control system (9) being **characterised in that** the measurement sensor (4-a) of the first actuator (2-a) is connected externally to the computing member (5-b) of the second actuator (2-b),
- said computing member (5-b) of the second actuator (2-b) also comprising a function (MON) for monitoring the movement member (3-a) of the first actuator (2-a), configured to transmit a digital state (E-a) of the movement member (3-a) of the first actuator (2-a) to the electronic computer (1) on the basis of the analogue measurement (S-a) of the measurement sensor (4-a) of the first actuator (2-a).

2. The control system (9) as claimed in claim 1, wherein the computing member (5-b) of the second actuator (2-b) is made in one-part.

3. The control system (9) according to one of claims 1 and 2, wherein the movement member (3-a, 3-b) of each actuator (2-a, 2-b) is monitored by the computing member (5-a, 5-b) of at least one actuator (2-a, 2-b) other than that to which it belongs, preferably a single one.

4. The control system (9) according to one of claims 1 to 3, wherein:
- the measurement sensor (4-a) of the first actuator (2-a) is also internally connected to the computing member (5-a) of the first actuator (2-a),
- said computing member (5-a) of the first actuator (2-a) also comprises a function (MON) for monitoring the movement member (3-a) of the first actuator (2-a), configured to transmit a digital state (E-a) of the movement member (3-a) of the first actuator (2-a) to the computer (1) on the basis of the analogue measurement (S-a) of the measurement sensor (4-a) of the first actuator (2-a).

5. The control system (9) according to one of claims 1 to 4, comprising at least one pair of two actuators (2-a, 2-b) and wherein the movement member (3-a, 3-b) of each actuator (2-a, 2-b) of the pair is monitored by the computing member (5-a, 5-b) of the other actuator (2-a, 2-b) of the pair.

6. The control system (9) according to one of claims 1 to 5, comprising at least three actuators (2-a, 2-b, 2-c) forming a group ordered consecutively in a circular manner and wherein, in each actuator (2-a, 2-b, 2-c) of the group:
- the movement member (3-a, 3-b, 3-c) is monitored by the computing member (5-a, 5-b, 5-c) of the next order actuator (2-a, 2-b, 2-c) of the group, and
- the computing member (3-a, 3-b, 3-c) comprises a function for monitoring (MON) the movement member (3-a, 3-b, 3-c) of the previous-order actuator (2-a, 2-b, 2-c) of the group.

7. The control system (9) according to one of claims 1 to 6, comprising an assembly of at least two actuators (2-a, 2-b, 2-c) wherein the movement member (3-a, 3-b, 3-c) of each actuator (2-a, 2-b, 2-c) of the assembly is monitored by the computing member (5-a, 5-b, 5-c) of each actuator (2-a, 2-b, 2-c) of the assembly.

8. The control system (9) according to one of claims 1 to 7, further comprising at least one aircraft electronic computer (1), the computing member (5-a, 5-b, 5-c) of each actuator (2-a, 2-b, 2-c) being connected to the at least one electronic computer (1) so as to transmit the digital command (O-a, O-b, O-c) and the digital state (E-a, E-b, E-c), of said actuator (2-a, 2-b, 2-c), preferably via a single digital control and monitoring line (8-a, 8-b, 8-c).

9. An aircraft comprising a control system (9) according to one of claims 1 to 8.

10. A method for controlling actuators in an aircraft implemented by means of the control system (9) according to one of claims 1 to 8, method wherein:
- the computing member (5-a) of the first actuator (2-a) implements a step for controlling the movement member (3-a) of the first actuator (2-a), the control step consisting in transmitting an analogue setpoint (C-a) to said movement member (3-a) on the basis of a digital command (O-a) coming from the electronic computer (1), and
- the computing member (5-b) of the second actuator (2-b) implements a step of monitoring the movement member (3-a) of the first actuator (2-a), the monitoring step consisting in transmitting a digital state (E-a) of said movement member (3-a) to the electronic computer (1) on the basis of the analogue measurement (S-a) of the measurement sensor (4-a) of the first actuator (2-a).
